# EUROPÄISCHE PATENTANMELDUNG

(11) **EP 1 972 497 A2**
(43) Veröffentlichungstag der Anmeldung: **24.09.2008**
(21) Anmeldenummer: 08152951.3
(22) Anmeldetag: 18.03.2008
(51) Int. Cl.: B60R 1/08

(54) **Aussenspiegelanordnung für Kraftfahrzeuge**

(30) Priorität: 19.03.2007 DE 102007013028
(71) Anmelder: MEKRA Lang GmbH & Co. KG, 90765 Fürth (DE)
(72) Erfinder: Kilic, Orhan, 91522 Ansbach (DE); Popp, Albrecht, 91629 Weihenzell (DE); Lang, Werner, 91465 Ergersheim (DE)
(74) Vertreter: Winter, Brandl, Fürniss, Hübner Röss, Kaiser, Polte Partnerschaft Patent- und Rechtsanwaltskanzlei

(57) **Zusammenfassung**

Die Erfindung betrifft eine Außenspiegelanordnung (10) mit einem Frontspiegel (18a) der Gruppe VI der Richtlinie 2005/27/EG zur Vermittlung eines ersten Sichtfeldes und einem Nahbereichs-/ Anfahrspiegel (18b) der Gruppe V der Richtlinie 2005/27/EG zur Vermittlung eines zweiten Sichtfeldes, die in einem Spiegelkopf (12) integriert sind. Erfindungsgemäß weist der Spiegelkopf (12) eine gemeinsame Spiegelscheibe (18) mit einem das erste Sichtfeld vermittelnden ersten Spiegelflächenbereich (18a) und einem das zweite Sichtfeld vermittelnden zweiten Spiegelflächenbereich (18b) auf.

## Beschreibung

Die Erfindung betrifft eine Außenspiegelanordnung für Kraftfahrzeuge, umfassend einen Frontspiegel der Gruppe VI und einen Nahbereichs- oder Anfahrspiegel der Gruppe V der Richtlinie 2003/97/EG des europäischen Parlaments und des Rates vom 10. November 2003.

Die Richtlinie 2003/97/EG regelt für die in der Richtlinie 70/156/EWG des Rates vom 6. Februar 1970 definierten Kraftfahrzeugklassen die Mindestanzahl und den Typ der vorgeschriebenen Spiegel (Innen- und Außenspiegel) sowie deren Anbringungsstellen in Abhängigkeit von der Kraftfahrzeugklasse. Für Kraftfahrzeuge der Klassen N₂>7,5 t und N₃ sind nach der Richtlinie 2003/97/EG als Außenspiegel unter anderem ein auch als Rampenspiegel bekannter Nahbereichs- oder Anfahrspiegel der Gruppe V (im Folgenden: Nahbereichs-/Anfahrspiegel) und ein Frontspiegel der Gruppe VI (im Folgenden: Frontspiegel) vorgeschrieben. Für Kraftfahrzeuge der anderen Klassen sind derartige Spiegel zulässig. Der Nahbereichs-/Anfahrspiegel und der Frontspiegel sind zum einen so anzubringen, dass der Fahrer von seinem Sitz aus in normaler Fahrhaltung die Fahrbahn seitlich vom Kraftfahrzeug bzw. vor dem Kraftfahrzeug deutlich einsehen kann. Zum anderen sind diese Spiegel so am Kraftfahrzeug anzubringen, dass kein Punkt dieser Spiegel oder ihrer Halterungen in allen möglichen Stellungen weniger als 2 m über dem Boden liegt, wenn das Kraftfahrzeug bis zur technisch zulässigen Höchstmasse beladen ist.

Bislang war es üblich, den Nahbereichs-/Anfahrspiegel und den Frontspiegel über unabhängige Halterungen und damit voneinander getrennt an geeigneten Anbringungsstellen am Fahrerhaus des Kraftfahrzeugs anzubringen. In der DE 198 39 833 A1 wird beispielsweise ein als Rampenspiegel bezeichneter Nahbereichs-/Anfahrspiegel (Spiegelkopf mit Gehäuse und Spiegelscheibe) beschrieben, der über eine eigene Halterung am Fahrerhaus oberhalb der Beifahrertür angebracht ist. Der Frontspiegel (Spiegelkopf mit Gehäuse und Spiegelscheibe) wird in der Regel über eine eigene Halterung am Fahrerhaus oberhalb der Windschutzscheibe angebracht. Die getrennte Anbringung des Nahbereichs-/Anfahrspiegels und Frontspiegels mag den Vorteil haben, den Nahbereichs-/Anfahrspiegel und den Frontspiegel voneinander unabhängig so ausrichten zu können, dass der Fahrer einen guten Blick auf das jeweilige Sichtfeld seitlich des Kraftfahrzeugs bzw. vor dem Kraftfahrzeug hat. Verglichen mit einer Anordnung, bei der der Frontspiegel und/oder der Nahbereichs-/Anfahrspiegel an der Halterung für den Hauptrückspiegel (groß) der Gruppe II der oben genannten Richtlinie 2003/97/EG angebracht sind, wird durch die getrennte Anbringung zudem die auf die jeweilige Halterung wirkende Last reduziert.

Andererseits erfordert die getrennte Anbringung des Nahbereichs-/Anfahrspiegels und des Frontspiegels eigene Halterungen unterschiedlicher Form und Größe. In der Summe wirkt sich die getrennte Anbringung daher nachteilig auf das Gewicht und die Herstellkosten für den Nahbereichs-/Anfahrspiegel und Frontspiegel aus. Zudem erhöht die getrennte Anbringung den Aufwand für die Montage des Nahbereichs-/Anfahrspiegels und des Frontspiegels an das Kraftfahrzeug und muss der Fahrer zwei räumlich getrennte Spiegel im Auge behalten.

Aus der DE 68 10 217 U ist ein asphärischer Spiegel mit zwei Sichtbereichen als Rückspiegel für eine Innenraummontage in einem PKW bekannt, der aber aufgrund seiner Bauart nicht als Rampenspiegel und Weitwinkelspiegel entsprechend der oben genannten geforderten Richtlinien eingesetzt werden kann. Bei der US 2007/0008637 A1 wird ein ellipsoidförmig gewölbter Hohlspiegel mit zwei Prismaflächen als Umlenkspiegel angewendet, bei dem dadurch zwei verschiedene Sichtbereiche gleichzeitig einsehbar sind. In der DE 89 05 801 U1 wird eine Außenspiegelanordnung für Busspiegel offenbart, bei der drei Spiegel auf der Beifahrerseite in einem Gehäuse untergebracht sind. Dabei weist jeder Spiegel ein eigenes separates Spiegelglas auf.

Eine Rückspiegelanordnung für Nutzfahrzeuge mit den Merkmalen des Oberbegriffs von Anspruch 1 ist des Weiteren aus der DE 197 11 547 A1 bekannt. Dabei handelt es sich um einen Busspiegel bei dem drei Spiegel auf der Beifahrerseite in einem Gehäuse untergebracht sind und bei dem ein Rampenspiegel mit einem Weitwinkelspiegel kombiniert sind aber jeweils ein eigenes Spiegelglas aufweisen. Hiervon ausgehend liegt der vorliegenden Erfindung die Aufgabe zugrunde, eine Außenspiegelanordnung für einen Nahbereichs-/Anfahrspiegel und einen Frontspiegel im Sinne der oben genannten Richtlinie 2003/97/EG bereitzustellen, mit der sich das Gewicht und die Herstellkosten reduzieren lassen, die Montage vereinfachen lässt und der Fahrer zuverlässig einen guten Überblick über die durch den Nahbereichs-/Anfahrspiegel und Frontspiegel zu vermittelnden Sichtfelder erhält.

Diese Aufgabe wird gelöst durch eine Außenspiegelanordnung mit den Merkmalen des Anspruchs 1. Vorteilhafte Weiterbildungen sind Gegenstand abhängiger Ansprüche.

Die erfindungsgemäße Außenspiegelanordnung weist einen (gemeinsamen) Spiegelkopf auf, in den ein Frontspiegel der Gruppe VI der Richtlinie 2003/97/EG zur Vermittlung eines vor einem Kraftfahrzeug liegenden ersten Sichtfeldes und ein Nahbereichs-/ Anfahrspiegel der Gruppe V der Richtlinie 2003/97/EG zur Vermittlung eines seitlich des Kraftfahrzeug liegenden zweiten Sichtfeldes integriert und durch eine gemeinsame Spiegelscheibe realisiert sind. Hierbei weist die Spiegelscheibe einen das erste Sichtfeld vermittelnden ersten Spiegelflächenbereich und einen das zweite Sichtfeld vermittelnden zweiten Spiegelflächenbereich auf. Die Grenzen des ersten und zweiten Spiegelflächenbereichs können für den Fahrer z.B. graphisch durch Linien, durch unterschiedliche Tönung der beiden Spiegelflächenbereiche, und/oder durch in die Spiegelscheibe eingearbeitete Markierungen kenntlich gemacht sein. Zur Anbringung des (gemeinsamen) Spiegel kopfes der erfindungsgemäßen Außenspiegelanordnung an einer geeigneten Stelle am Fahrerhaus des Kraftfahrzeugs ist lediglich eine geeignete Halterung erforderlich. Gegenüber der Herstellung zweier unabhängiger Spiegelanordnungen, d.h. eines Nahbereichs-/Anfahrspiegels mit Spiegelkopf (Gehäuse und Spiegelscheibe) und Halterung und eines Frontspiegels mit Spiegelkopf (Gehäuse und Spiegelscheibe) und Halterung lassen sich durch die erfindungsgemäße Kombination des Frontspiegels und des Nahbereichs-/ Anfahrspiegels in einem Spiegelkopf mit einer Spiegelscheibe, d.h. in ein gemeinsames Gehäuse, das Gewicht und die Herstellkosten erheblich reduzieren. Da durch die Kombination des Nahbereichs-/Anfahrspiegels und Frontspiegels nur mehr ein Spiegelkopf am Kraftfahrzeug zu montieren ist, wird darüber hinaus die Montage vereinfacht. Für den Fahrer hat die erfindungsgemäße Spiegelanordnung des Weiteren den Vorteil, dass er durch Blick auf nur mehr einen Spiegelkopf zwei Sichtfelder, d.h. das durch den Nahbereichs-/Anfahrspiegel vermittelte Sichtfeld und das durch den Frontspiegel vermittelte Sichtfeld, beobachten kann und nicht mehr zwei voneinander unabhängige, örtlich unterschiedlich angebrachte Spiegel beobachten muss.

Die Spiegelscheibe ist vorzugsweise sphärisch gewölbt. Zur Erfüllung der Richtlinie 2003/97/EG darf der zugehörige Krümmungsradius des Nahbereichs-/Anfahrspiegels nicht kleiner als 300 mm sowie des Frontspiegels nicht kleiner als 200 mm sein. In der Regel ist es aber möglich, beide Spiegel mit dem gleichen Krümmungsradius auszuführen, wobei in diesem Fall der Krümmungsradius dann vorzugsweise zwischen 200 mm und 340 mm liegen und im Besonderen, um die Baugröße des Spiegelkopfes möglichst klein zu halten, ca. 240 mm oder zur Vereinfachung der Herstellung des Spiegelkopfes zwischen 300 mm und 340 mm, vorzugsweise ca. 315 mm, betragen kann.

Zur Anpassung der Ausrichtung des Nahbereichs-/Anfahrspiegels bzw. Frontspiegel an den Blickwinkel eines auf dem Fahrersitz sitzenden Fahrers ist die Spiegelscheibe im Spiegelkopfgehäuse vorzugsweise verstellbar gehalten. Die Verstellbarkeit der Spiegelscheibe relativ zum Spiegelkopfgehäuse gestattet geringfügige Korrekturen, ohne die komplette Außenspiegelanordnung oder den Spiegel kopf relativ zur Halterung verstellen zu müssen. Die Verstellung der Spiegelscheibe relativ zum Spiegelkopfgehäuse erfolgt vorzugsweise durch eine zwischen dem Spiegelkopfgehäuse und der Spiegelscheibe angeordnete, an sich bekannte mechanische oder elektromotorische Verstelleinrichtung, beispielsweise in der Art der in der WO 02/072386 A1 beschriebene motorische Verschwenkeinrichtung. Zusätzlich kann der Spiegelkopf gegenüber dem Kraftfahrzeug, d.h. entweder der Spiegelkopf mit der Halterung relativ zum Kraftfahrzeug oder der Spiegelkopf relativ zur Halterung, verstellbar ausgeführt sein.

Die erfindungsgemäße Außenspiegelanordnung findet bevorzugt Verwendung für Nutzkraftfahrzeuge der Klassen N₂>7,5 t und N₃ der Richtlinie 2003/97/EG. Bei derartigen Nutzkraftfahrzeugen wird die erfindungsgemäße Außenspiegelanordnung bevorzugt über eine Spiegelkopfhalterung, die sich von dem durch das Dach, die Frontseite und die Beifahrerseite des Fahrerhauses definierten Eckbereich ausgehend seitlich nach vorne und schräg nach unten erstreckt, in einem vorgegebenen Abstand zum Fahrerhaus an diesem angebracht.

Des Weiteren wird die erfindungsgemäße Außenspiegelanordnung bevorzugt so am Fahrerhaus angebracht, dass der Spiegel kopf, bei einer frontalen Betrachtung des Fahrerhauses, im Bereich des Frontspiegels zumindest teilweise seitlich in die Frontscheibe ragt bzw. vor der Frontscheibe liegt. Bei dieser Anbringung der Außenspiegelanordnung kann ein bedingt durch die Karosserie zwischen der Frontseite und der Beifahrerseite vom Fahrersitz aus nicht einsehbarer Bereich des Spiegelkopfes ausgespart werden. Erfindungsgemäß kann der Spiegelkopf in einer vorteilhaften Ausgestaltung daher in einer Draufsicht auf die Spiegelscheibe einen in etwa v-förmigen Umriss aufweisen. Diese Ausgestaltung ermöglicht die Anbringung der Außenspiegelanordnung in dem vorstehend umschriebenen Eckbereich des Fahrerhauses in der Weise, dass der v-förmige Umriss des Spiegelkopfs der Kontur des durch die Frontseite und die Beifahrerseite gebildeten Eckbereichs des Fahrerhauses folgt.

Alternativ dazu kann der Spiegelkopf in einer Draufsicht auf die Spiegelscheibe einen in etwa trapezförmigen Umriss aufweisen.

In einer Draufsicht auf die Spiegelscheibe betrachtet, ist der Spiegelkopf vorzugsweise symmetrisch in eine linke und eine rechte Seite aufgeteilt.

Die erfindungsgemäße Außenspiegelanordnung wird im Folgenden anhand einer bevorzugten Ausführungsform und der Zeichnungen näher erläutert. In der Zeichnung zeigt die:
Fig. 1 eine schematische Seitensicht eines Nutzkraftfahrzeugs mit der erfindungsgemäßen Außenspiegelanordnung;
Fig. 2 eine schematische Draufsicht des Nutzkraftfahrzeugs aus Fig. 1;
Fig. 3 eine schematische Draufsicht des Nutzkraftfahrzeugs aus Fig. 1, in der , in der die nach der Richtlinie 2003/97/EG durch den Nahbereichs-/Anfahrspiegel und Frontspiegel zu vermittelnden Sichtfelder und die durch die erfindungsgemäße Au-ßenspiegelanordnung tatsächlich vermittelten Sichtfelder dargestellt sind;
Fig. 4 eine schematische Seitenansicht der erfindungsgemäßen Außenspiegelanordnung gemäß der bevorzugten Ausführungsform;
Fig. 5 eine schematische Draufsicht der erfindungsgemäßen Außenspiegelanordnung gemäß der bevorzugten Ausführungsform;
Fig. 6 eine Darstellung zur Erläuterung der Abmessungen und geometrischen Form der erfindungsgemäßen Außenspiegelanordnung gemäß der bevorzugten Ausführungsform; und
Fig. 7 eine Abwandlung der erfindungsgemäßen Außenspiegelanordnung gemäß der bevorzugten Ausführungsform.

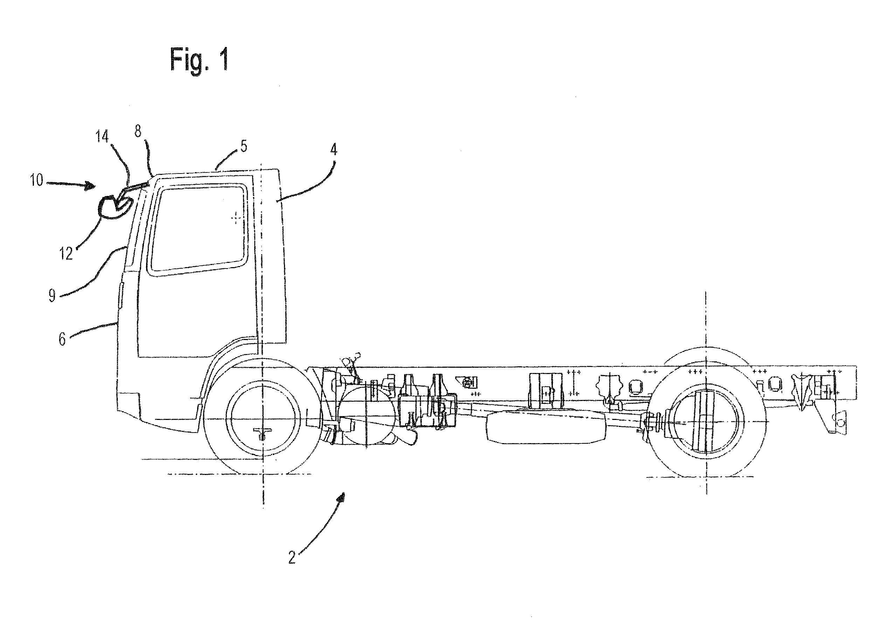

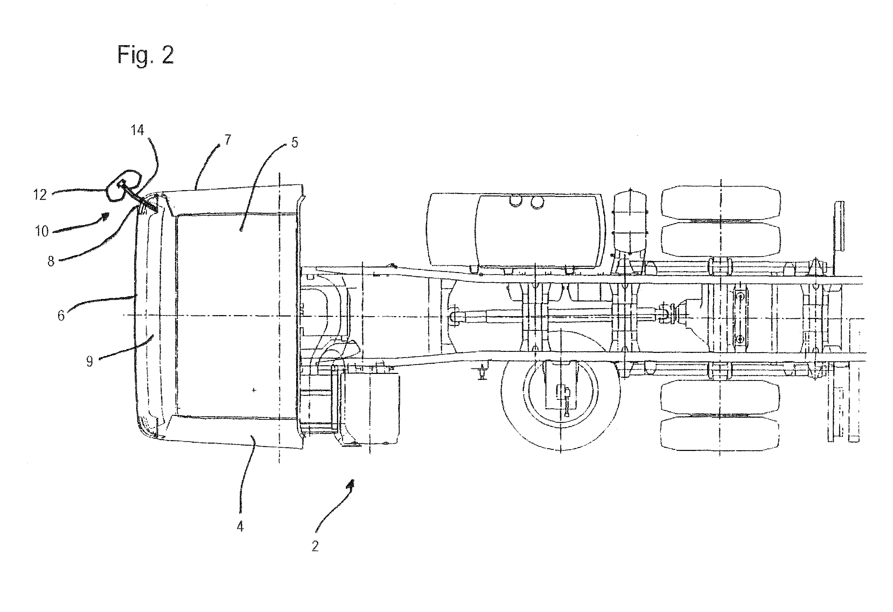

Fig. 1 und 2 zeigen schematisch ein Nutzkraftfahrzeug 2 der Klassen N₂>7,5 t und N₃ gemäß der Richtlinie 2003/97/EG, für das die erfindungsgemäße Außenspiegelanordnung bevorzugt Anwendung findet. Wie aus Fig. 1 und 2 ersichtlich, ist ein Spiegelkopf 12 der Außenspiegelanordnung 10 über eine Halterung 14 am Fahrerhaus 4 des Nutzkraftfahrzeugs 2 angebracht. Die Halterung 14 in der Form eines abgewinkelten Arms erstreckt sich von dem durch das Dach 5, die Frontseite 6 und die Beifahrerseite 7 des Fahrerhauses 4 definierten Eckbereich 8 ausgehend seitlich nach vorne und schräg nach unten Richtung Fahrbahn und trägt den Spiegel kopf 12 in einem vorgegebenen Abstand zum Fahrerhaus 4. Der üblicherweise aus Kunststoff oder Stahl gefertigte Arm 14 ist in an sich bekannter Weise an seinem einen Ende durch Verschraubung, Kleben, Klemmen, etc. am Fahrerhaus 4 befestigt oder integral mit dem Fahrerhaus 4 ausgebildet. An dem anderen Ende des Arms 14 ist der Spiegelkopf 12 starr, z.B. durch Verschraubung, Kleben, Klemmen, etc. oder integrale Ausbildung, angebracht. Alternativ dazu kann der Spiegelkopf 12 in an sich bekannter Weise über eine zur Ausrichtung des Spiegelkopfs 12 relativ zum Kraftfahrzeug 2 lösbare und zur Sicherung der durch die Ausrichtung festgelegten Position feststellbare (nicht gezeigte) Gelenkverbindung mit dem Arm 14 verstellbar verbunden sein. Aus Gründen der Übersichtlichkeit sind in den Figuren die nach der Richtlinie 2003/97/EG weiterhin erforderlichen Außenspiegel nicht gezeigt.

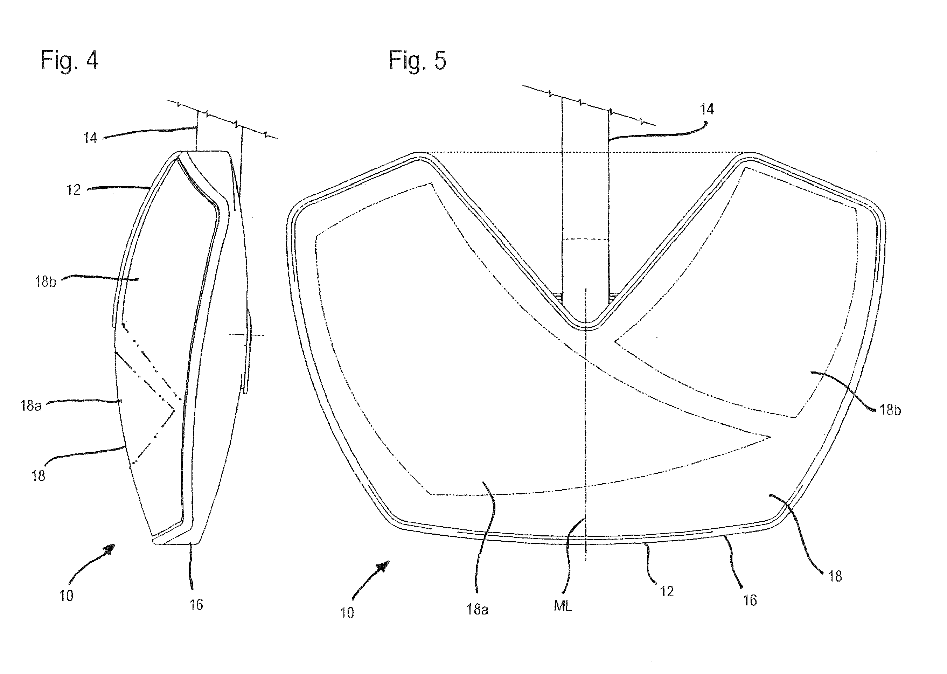

Wie aus Fig. 1 ersichtlich ist, ist der Spiegelkopf 12 in der Weise am Fahrerhaus 4 des Nutzkraftfahrzeugs 2 angebracht, dass er, bei einer frontalen Betrachtung des Fahrerhauses 4, im Bereich des Frontspiegels 18a (vgl. Fig. 5) teilweise seitlich in die Frontscheibe 9 ragt, d.h. vor der Frontscheibe 9 liegt.

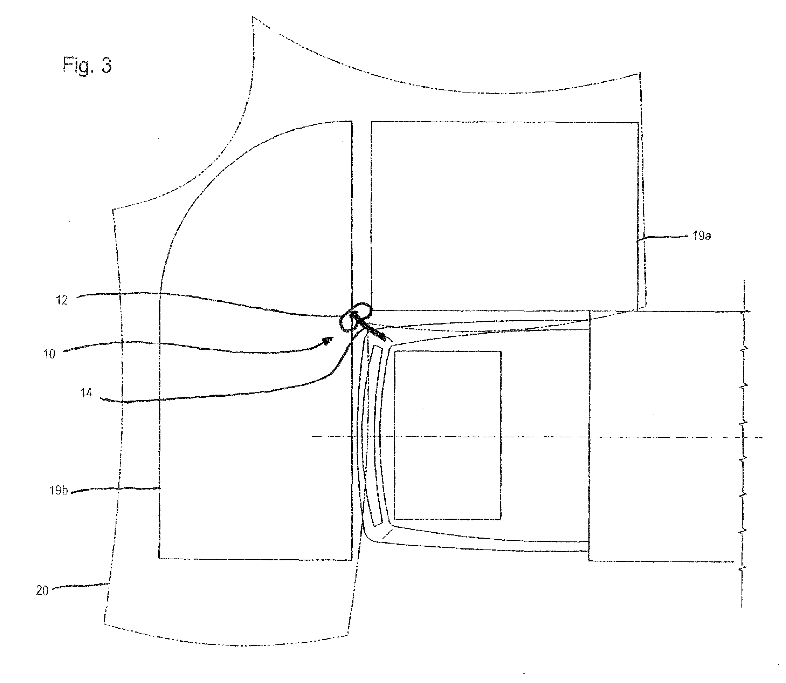

Fig. 3 zeigt die nach der Richtlinie 2003/97/EG durch den Nahbereichs-/Anfahrspiegel 18b bzw. Frontspiegel 18a dem Fahrer zu vermittelnden Sichtfelder 19b bzw. 19a im Vergleich zu dem durch den Nahbereichs-/Anfahrspiegel bzw. Frontspiegel der erfindungsgemäßen Außenspiegelanordnung 10 tatsächlich vermittelten Sichtfeld 20. Wie aus Fig. 3 zu erkennen ist, überdeckt das durch die erfindungsgemäße Außenspiegelanordnung 10 tatsächlich vermittelte Sichtfeld 20 die nach der Richtlinie 2003/97/EG zu vermittelnden Sichtfelder 19b bzw. 19a.

Der Spiegelkopf 12 der erfindungsgemäßen Außenspiegelanordnung 10 kombiniert einen Nahbereichs-/Anfahrspiegel 18b und einen Frontspiegel 18a im Sinne der Richtlinie 2003/97/EG, in einem gemeinsamen Spiegelgehäuse 16, das über die Halterung 14 am Kraftfahrzeug 2, konkret am Fahrerhaus 4 des Kraftfahrzeugs 2, angebracht ist.

Die Fig. 4 und 5 zeigen eine bevorzugte Ausführungsform des Spiegelkopfes 12 der erfindungsgemäßen Außenspiegelanordnung, der eine Spiegelscheibe 18 und ein die Spiegelscheibe 18 aufnehmendes Spiegelkopfgehäuse 16 aufweist. In der bevorzugten Ausführungsform ist die Spiegelscheibe 18 lageunveränderlich, d.h. starr, im Spiegelkopfgehäuse 16 aufgenommen.

Das aus Kunststoff gefertigte Spiegelkopfgehäuse 16 ist in an sich bekannter Weise schalenförmig aufgebaut und trägt die Spiegelscheibe 18.

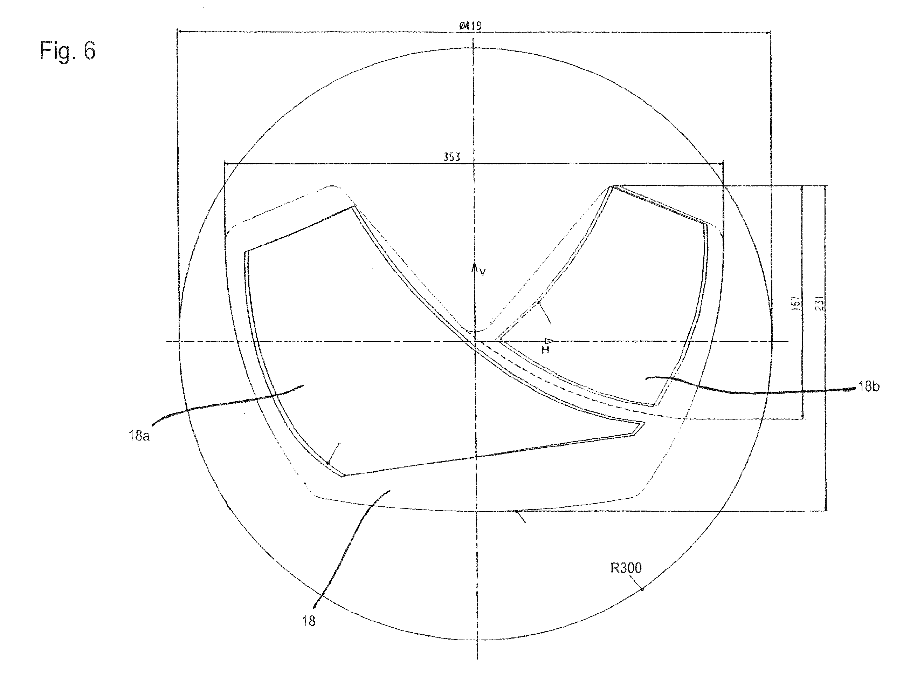

Die Spiegelscheibe 18 weist, wie in Fig. 5 zu sehen, einen das erste Sichtfeld vermittelnden ersten Spiegelflächenbereich 18a, der die Funktion des Frontspiegels übernimmt, und einen das zweite Sichtfeld 18b vermittelnden zweiten Spiegelflächenbereich, der die Funktion des Nahbereichs-/Anfahrspiegels übernimmt, auf. In Fig. 4 und 6 sind die Grenzen des ersten und zweiten Spiegelflächenbereichs 18a, 18b jeweils durch Strich-Punkt-Linien angegeben. Fig. 5 zeigt des Weiteren, dass der Spiegelkopf 12 und damit auch die Spiegelscheibe 18 bezüglich einer gedachten Mittellinie ML symmetrisch aufgebaut ist und annähernd einen v-förmigen Umriss aufweist, wobei aber die beiden Spiegelflächenbereiche 18a, 18b bzw. der Frontspiegel und Nahbereichs-/Anfahrspiegel nicht der symmetrischen Aufteilung des Spiegelkopfes 12 bzw. der Spiegelscheibe 18 folgen. Der das erste Sichtfeld vermittelnde erste Spiegelflächenbereich 18a erstreckt sich in Fig. 5 von der linken Hälfte der Spiegelscheibe 18 über die Mittelinie ML hinweg in die rechte Hälfte der Spiegelscheibe 18, während der das zweite Sichtfeld vermittelnde zweite Spiegelflächenbereich 18b vollständig in der rechten Hälfte des Spiegelkopfes 12 bzw. der Spiegelscheibe 18 liegt.

In Fig. 6 sind die Abmessungen und geometrischen Daten der Spiegelscheibe 18 der Außenspiegelanordnung 10 gemäß der bevorzugten Ausführungsform angegeben. Die Bezugszeichen V und H in Fig. 6 geben die Vertikale bzw. Horizontale an. Die Spiegelscheibe 18 ist sphärisch gewölbt mit einem Kugel- oder Krümmungsradius R von 300 mm. Die Spiegelscheibe 18 liegt auf der gekrümmten Oberfläche (Kalotte) eines durch einen ebenen Schnitt durch eine Kugel mit einem Radius R von 300 mm erhaltenen Kugelabschnitts, dessen Schnittfläche einen Durchmesser ⌀ von 419 mm hat. Die Einheit der in Fig. 6 weiter angegebenen Abmessungen der Spiegelscheibe 18 wie auch der ersten und zweiten Spiegelflächenbereiche 18a, 18b ist in mm. Mit den in Fig. 6 angegebenen Radien und Abmessungen erfüllt die Spiegelscheibe 18 bzw. erfüllen die ersten und zweiten Spiegelflächenbereiche 18a, 18b die Vorgaben der Richtlinie 2003/97/EG für die Vermittlung der einem Nahbereichs-/Anfahrspiegel bzw. einem Frontspiegel zugeordneten Sichtfelder 19a, 19b.

In einer ersten Abwandlung der bevorzugten Ausführungsform, die in Fig. 5 durch eine gestrichelte Linie angegeben ist, weist der Spiegelkopf 12 bei symmetrischer Gestaltung, anstatt dem oben erwähnten v-förmigen Umriss, einen in etwa trapezförmigen Umriss auf.

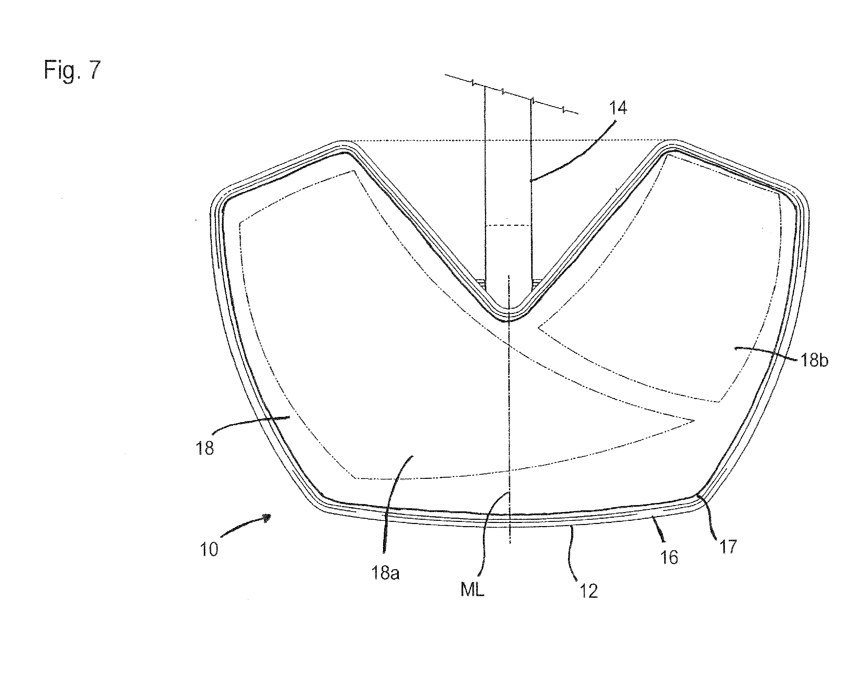

In einer zweiten Abwandlung der bevorzugten Ausführungsform, die in Fig. 7 skizziert ist, ist die Spiegelscheibe 18 über eine (nicht gezeigte) geeignete Verstelleinrichtung, beispielsweise in der Art einer in der WO 02/072386 A1 beschriebenen elektromotorisch betätigbaren Verschwenkeinrichtung, im Spiegelkopfgehäuse 16 stufenlos verstellbar aufgenommen. In Fig. 7 verdeutlicht das Bezugszeichen 17 die Zwischenräume zwischen der Spiegelscheibe 18 und dem Spiegelkopfgehäuse 16. Alternativ zur elektromotorischen Verstellung kann die Spiegelscheibe 18 auch über eine mechanisch betätigbare Verstelleinrichtung, z.B. eine mechanische Rastverschwenkeinrichtung, die diskrete Schwenkbewegungen der Spiegelscheibe 18 zulässt, relativ zum Spiegelkopfgehäuse 16 verstellt werden.

In einer (nicht gezeigten) dritten Abwandlung der bevorzugten Ausführungsform ist zusätzlich das Spiegelkopfgehäuse 16 in geeigneter Weise, z.B. durch eine lösbare Klemmbefestigung, verstellbar an der Halterung 14 befestigt.

## Patentansprüche

1. Außenspiegelanordnung (10) umfassend einen Frontspiegel (18a) der Gruppe VI der Richtlinie 2005/27/EG zur Vermittlung eines ersten Sichtfeldes und einen Nahbereichs-/ Anfahrspiegel (18b) der Gruppe V der Richtlinie 2005/27/EG zur Vermittlung eines zweiten Sichtfeldes, die in einem Spiegelkopf (12) integriert sind,
**dadurch gekennzeichnet, dass**
der Spiegelkopf (12) eine gemeinsame Spiegelscheibe (18) mit einem das erste Sichtfeld vermittelnden ersten Spiegelflächenbereich (18a) und einem das zweite Sichtfeld vermittelnden zweiten Spiegelflächenbereich (18b) aufweist.

2. Außenspiegelanordnung (10) nach Anspruch 1, **dadurch gekennzeichnet, dass** die Spiegelscheibe (18) sphärisch gewölbt ist.

3. Außenspiegelanordnung (10) nach Anspruch 2, **dadurch gekennzeichnet, dass** die Spiegelscheibe (18) sphärisch gewölbt ist und der Krümmungsradius (R) der Spiegelscheibe (18) im Bereich von 200 mm bis 340 mm, vorzugsweise bei 240 mm oder 315 mm, liegt.

4. Außenspiegelanordnung (10) nach Anspruch 2 oder 3, **dadurch gekennzeichnet, dass** die Spiegelscheibe (18) in einem Spiegelkopfgehäuse (16) verstellbar gehalten ist.

5. Außenspiegelanordnung (10) nach einem der Ansprüche 1 bis 4, **dadurch gekennzeichnet, dass** der Spiegelkopf (12) in der Draufsicht auf die Spiegelscheibe (18) einen in etwa v-förmigen Umriss aufweist.

6. Kraftfahrzeug (2) mit einer Außenspiegelanordnung (10) nach einem der Ansprüche 1 bis 5, **dadurch gekennzeichnet, dass** der Spiegelkopf (12) über eine Spiegelkopfhalterung (14), die sich von dem durch das Dach (5), die Frontseite (6) und die Beifahrerseite (7) des Fahrerhauses (4) definierten Eckbereich (8) ausgehend seitlich nach vorne und schräg nach unten erstreckt, in einem vorgegebenen Abstand zum Fahrerhaus (4) an diesem angebracht ist.

7. Kraftfahrzeug (2) nach Anspruch 6, **dadurch gekennzeichnet, dass** der Spiegelkopf (12), bei einer frontalen Betrachtung des Fahrerhauses (4), im Bereich des Frontspiegels (18a) zumindest teilweise vor der Frontscheibe (9) liegt.

8. Kraftfahrzeug (2) nach Anspruch 6 oder 7 mit einer Außenspiegelanordnung (10), **dadurch gekennzeichnet, dass** die Außenspiegelanordnung (10) in der Weise in einem vorgegebenen Abstand zum Fahrerhaus (4) ausgerichtet ist, dass der v-förmige Umriss des Spiegelkopfs (12) der Kontur des durch die Frontseite (6) und die Beifahrerseite (7) gebildeten Eckbereichs (8) des Fahrerhauses (4) folgt.
